# EUROPEAN PATENT SPECIFICATION

(11) **EP 3 980 264 B1**
(45) Date of publication and mention of the grant of the patent: **14.05.2025**
(21) Application number: 20729806.8
(22) Date of filing: 05.06.2020
(51) Int. Cl.: B32B 27/08, B32B 27/32, C08L 23/0807

(54) **MULTILAYER MACHINE DIRECTION ORIENTED FILMS FOR SEALING**
MEHRSCHICHTIGE IN MASCHINENRICHTUNG AUSGERICHTETE FOLIEN ZUR ABDICHTUNG
FILMS MULTICOUCHES ORIENTÉS DANS LE SENS MACHINE POUR SCELLER

(30) Priority: 07.06.2019 EP 19179028
(43) Date of publication of application: 13.04.2022
(73) Proprietor: Borealis AG, 1020 Vienna (AT)
(72) Inventor: ABUL KASHEM, Mottakin, 84489 Burghausen (DE); SCHUSTER, Gerhard, 4021 Linz (AT); NUMMILA-PAKARINEN, Auli, 06100 Porvoo (FI)
(74) Representative: Dehns
(86) International application number: PCT/EP2020/065722
(87) International publication number: WO 2020/245425

(56) References cited:
- US-A1- 2015 251 388

## Description

This invention relates to multilayer machine direction oriented film for sealing comprising at least one layer A and one layer B, wherein
layer A comprises (i) 25 to 75 w%, based on the total weight of the layer, of at least one multimodal linear low density polyethylene (LLDPE) terpolymer with at least two C4-12 alpha olefins having a density of 910 to 925 kg/m³ and an MFR₂ of 0.05 to 5 g/10min which comprises a lower molecular weight (LMW) component and a higher molecular weight (HMW) component;
and (ii) 25 to 75 w%, based on the total weight of the layer, of at least one ethylene based plastomer with a density between 870 and 900 kg/m³;
wherein layer B comprises 75 to 100 w% or < 100 w%, based on the total weight of the layer, of at least one multimodal copolymer of ethylene with at least one C4-12 alpha olefin having a density of 915 to 940 kg/m³ and an MFR₂ of 0.1 to 5 g/10min.

The invention also relates to a process for the preparation of such a film and the use of such a film in packaging.

### Background of the Invention

The use of machine directional oriented (MDO) films made from polyethylene is well known. These films are generally produced to down gauge existing blown film recipes. This means less polymer film is required to achieve a target end use. For example, US 2015/251388 A1 discloses a multilayer machine direction oriented film comprising at least a layer A and one layer B, whereby layer A comprises a multimodal linear low density polyethylene (LLDPE). This LLDPE comprises a lower molecular weight (LMW) component and a higher molecular weight (HMW) component. The multilayer film can be coextruded and is intended to be used as a packaging.

However, existing films can still be improved upon. A particular challenge with MDO film is to achieve a balance of a good sealing behaviour, especially a low seal initiation temperature (SIT) and/or a high seal strength and/or a low seal sealing time and/or a broad sealing window in combination with good optical properties, especially for example low haze and/or high gloss, as well as further in combination with suitable mechanical properties, especially a suitable stiffness and/or tensile modulus and/or tear strengths and/or dart drop impact resistance.

The present inventors therefore sought a solution to the problem of finding the balance above. Films of the present invention have especially a low seal initiation temperatures (SIT).

### Summary of Invention

The present invention concerns a multilayer machine direction oriented film comprising at least one layer A and one layer B,
wherein layer A comprises (i) 25 to 75 wt%, based on the total weight of the layer, of at least one multimodal linear low density polyethylene (LLDPE) terpolymer with at least two C4-12 alpha olefins having a density of 910 to 925 kg/m³ and an MFR₂ of 0.05 to 5 g/10min which comprises a lower molecular weight (LMW) component and a higher molecular weight (HMW) component; wherein the HMW component of the LLDPE is a terpolymer or wherein both the HMW component and the LMW component of the LLDPE are copolymers of ethylene with one C4-12 alpha olefin and wherein the comonomer present in the LMW and HMW components is different;
and (ii) 25 to 75 w%, based on the total weight of the layer, of at least one ethylene based plastomer with a density between 870 and 900 kg/m³, and
wherein layer B comprises 75 to 100 wt%, based on the total weight of the layer, of at least one multimodal copolymer of ethylene with at least one C4-12 alpha olefin having a density of 915 to 940 kg/m³ and an MFR₂ of 0.1 to 5 g/10min.

Viewed from another aspect the invention provides a process for the preparation of a multilayer machine direction oriented film as hereinbefore defined comprising:
(I) obtaining a composition A) comprising 25 to 75 wt%, based on the total weight of the composition, of at least one multimodal linear low density polyethylene (LLDPE) terpolymer with at least two C4-12 alpha olefins having a density of 910 to 925 kg/m³ and an MFR₂ of 0.05 to 5 g/10min which comprises a lower molecular weight (LMW) component and a higher molecular weight (HMW) component; wherein the HMW component of the LLDPE is a terpolymer or wherein both the HMW component and the LMW component of the LLDPE are copolymers of ethylene with one C4-12 alpha olefin and wherein the comonomer present in the LMW and HMW components is different;
   and 25 to 75 w%, based on the total weight of the composition, of at least one ethylene based plastomer with a density between 870 and 900 kg/m³,
(II) obtaining a composition B) comprising 75 to 100 wt%, based on the total weight of the composition, of at least one multimodal copolymer of ethylene with at least one C4-12 alpha olefin having a density of 915 to 940 kg/m³ and an MFR₂ of 0.1 to 5 g/10min;
(III) coextruding compositions A) and B) to form a multilayer film having layers A) and B) comprising compositions A) and B) respectively; and
(IV) uniaxally stretching said film in the machine direction in a draw ratio of at least 1:2.

Viewed from another aspect the invention provides the use of a multilayer machine direction oriented film as hereinbefore defined in packaging.

### Detailed Description of Invention

In one embodiment of the machine direction oriented film according to the invention, said film may be a stretched film which is uniaxially oriented in the machine direction (MD) in a draw ratio of 1:2 to 1:8, preferably 1:3 to 1:8. It may have a film thickness of between 10 and 50 microns (after stretching) and/or whereby the ratio of the thickness of layer B to the thickness of layer A may be between 1 and 6, preferably between 1.5 and 5.

According to the invention, the layer A comprises at least one multimodal LLDPE terpolymer, wherein the HMW component of the LLDPE is a terpolymer or wherein both the HMW component and the LMW component of the LLDPE are copolymers of ethylene with one C4-12 alpha olefin and wherein the comonomer present in the LMW and HMW components is different.

It is also possible to combine a copolymer LMW component of ethylene with one C4-12 alpha olefin and a terpolymer HMW component of ethylene with two C4-12 alpha olefins (or vice versa).

The term terpolymer is used herein to define an ethylene polymer that contains at least two C4-12 alpha olefins. Preferred terpolymers contain 2 comonomers only.

In one embodiment of a film according to the invention, layer A may comprise 55 to 70 w%, preferably > 57 to < 70 w%, based on the total weight of polymer in the layer, of the multimodal LLDPE and 30 to 45 w%, preferably > 30 to < 43 w% of said plastomer.

In another embodiment of the film according to the invention, layer A may comprise 55 to 70 w%, preferably > 57 to < 70 w%, based on the total weight of polymer in the layer, of said plastomer and 30 to 45 w%, preferably > 30 to < 43 w% of the multimodal LLDPE.

In one embodiment of a film according to the invention, layer A may comprise 55 to 70 w%, preferably > 57 to < 70 w%, based on the total weight of the layer, of the multimodal LLDPE and 30 to 45 w%, preferably > 30 to < 43 w% of said plastomer.

In another embodiment of the film according to the invention, layer A may comprise 55 to 70 w%, preferably > 57 to < 70 w%, based on the total weight of the layer, of said plastomer and 30 to 45 w%, preferably > 30 to < 43 w% of the multimodal LLDPE.

In an embodiment of a film according to the invention, the multimodal LLDPE terpolymer of layer A may have a density of between 915 and < 925 kg/m³, preferably between > 915 and < 920 kg/m³.

In an embodiment of a film according to the invention, the multimodal LLDPE terpolymer of layer A may have a density of between 915 and 925 kg/m³, preferably between 915 and 920 kg/m³.

In another embodiment of a film according to the invention, the multimodal LLDPE terpolymer of layer A may have a density of between 918 and 925 kg/m³, preferably between 920 and 925 kg/m³.

In an embodiment of a film according to the invention, the multimodal LLDPE terpolymer of layer A may have an MFR₂ of between 0.1 and 3.0 g/10min, preferably > 0.1 and < 2.0 g/10min or 0.1 and 2.0 g/10min.

In an embodiment of a film according to the invention, the plastomer of layer A may be a copolymer of ethylene and 1-butene or ethylene and 1-octene.

Another embodiment of the film of the invention stipulates that the plastomer of layer A may be a terpolymer of ethylene, 1-butene and 1-octene.

In an embodiment of a film according to the invention, the plastomer of layer A may have a density of between > 870 and < 895 kg/m³, preferably between 875 and < 890 kg/m³, further preferred > 875 and < 885 kg/m³ and/or an MFR₂ of between 0.1 and 5 g/10min, preferably 0.5 and 3.0 g/10min, further preferred 0.6 and 2.0 g/10min.

In an embodiment of a film according to the invention, the plastomer of layer A may have a density of between 870 and 895 kg/m³, preferably between 875 and 890 kg/m³, further preferred 875 and 885 kg/m³.

According to another embodiment the plastomer of layer A may have a MFR₂ of between 0.1 and 10 g/10min, preferably 0.3 to 7 g/10min and more preferably from 0.5 to 5.0 g/10min.

In an embodiment of a film according to the invention, the multimodal copolymer of ethylene with at least one C4-12 alpha olefin of layer B may have a density of 916 to 940 kg/m³, preferably 916 to 925 kg/m³ or 930 to 940 kg/m³, such as > 916 to 940 kg/m³, preferably > 916 to 925 kg/m³ or > 930 to < 940 kg/m³.

In an embodiment of a film according to the invention, the multimodal copolymer of ethylene with at least one C4-12 alpha olefin of layer B may have an MFR₂ of 0.1 and 3.0 g/10min, preferably 0.1 to 2.5 g/10min or > 0.1 and < 2.5 g/10min.

In an embodiment of a film according to the invention, the multimodal copolymer of ethylene of layer B may comprise a high molecular weight (HMW) component and a low molecular weight (LMW) component, whereby the HMW component may be a terpolymer, preferably a terpolymer of ethylene, 1-butene and 1-hexene or whereby both the HMW component and the LMW components of multimodal copolymer of ethylene of layer B are copolymers of ethylene with one C4-12 alpha olefin, preferably copolymers of ethylene with 1-butene.

In an embodiment of a film according to the invention, layer B may comprise > 75 wt%, such as 77 to 100 wt%, such as > 77 to 100 w% or < 100 w%, preferably 78 to 100 wt%, such as > 78 w% to 100 w% or < 100 w% of the multimodal ethylene copolymer and/or may comprise 0 to 23 wt%, such as > 0 to < 23 w% , further preferred 0 to 22 wt%, such as > 0 to < 22 w% of a further multimodal copolymer of ethylene with at least one C4-12 alpha olefin having a density of 915 to 940 kg/m³, preferably 916 to 925 kg/m³, e.g. > 916 to < 925 kg/m³ and/or MFR₂ of 0.1 and 3.0 g/10min, preferably 0.1 to 2.0 g/10min such as > 0.1 and < 2.0 g/10min.

The further multimodal copolymer of ethylene with at least one C4-12 alpha olefin of layer B may be a multimodal linear low density polyethylene (LLDPE) as described above for layer A. In an embodiment of a film according to the invention, the film may comprise three layers with layer B located between layer A and a third layer C.

At least one of the layers A or B may comprise a multimodal LLDPE which comprises a HMW component and LMW component, whereby both components are copolymers of ethylene with one C4-12 alpha olefin, preferably copolymers of ethylene with 1-butene.

In an embodiment of a film according to the invention, the third layer C comprises a multimodal copolymer of ethylene with at least one C4-12 alpha olefin, having a density of 915 to 940 kg/m³, such as > 915 to 940 kg/m³ and an MFR₂ of 0.1 to 5 g/10min.

The multimodal copolymer of ethylene of layer C may be the same as described above for layer A or B, preferably Layer C consists of only one multimodal copolymer of ethylene, e.g. one multimodal LLDPE copolymer.

In a further embodiment of a film according to the invention as described here above, the third layer C is different from layer B and/or wherein the film is asymmetric with respect to the outer layers This means layer A is different from C.

### Polymers for Layer A)

The term LLDPE means linear low density polyethylene herein. The LLDPE of use in this invention is multimodal. The term "multimodal" means multimodal with respect to molecular weight distribution and includes also therefore bimodal polymers. The term "multimodal" may also mean multimodality with respect to the "comonomer distribution".

Usually, a LLDPE composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.

Ideally, the molecular weight distribution curve for multimodal polymers of the invention will show two distinction maxima.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE, there may be by definition a lower molecular weight component (LMW) and a higher molecular weight component (HMW). The LMW component has a lower molecular weight than the higher molecular weight component. This difference is preferably at least 5000 g/mol.

The multimodal LLDPE terpolymer of use in the A layer must comprise two comonomers. These may be present in the HMW component, i.e. it is a terpolymer component or the comonomers may be spread across both components. Furthermore, in case that the HMW component is a terpolymer, the lower molecular weight (LMW) component can be an ethylene homopolymer. In this case, the multimodal LLDPE is still a multimodal LLDPE terpolymer.

The multimodal LLDPE terpolymer of the invention may therefore be one in which the HMW component comprises repeat units deriving from ethylene and at least two other C₄₋₁₂ alpha olefin monomers such as 1-butene and one C₆₋₁₂ alpha olefin monomer. Ethylene preferably forms the majority of the LMW or HMW component.

The overall comonomer content in the multimodal LLDPE terpolymer may be for example 0.5 to 8.0 % by mol, preferably 0.7 to 6.5 % by mol, more preferably 1.0 to 4.5 % by mol and most preferably 1.5 to 4.0 % by mol.

1-Butene may be present in an amount of 0.2 to 2.5 % by mol, such as 0.4 to 2 % by mol, more preferably 0.5 to 1.5 % by mol and most preferably 0.6 to 1 % by mol.

The C6 to C12 alpha olefin may be present in an amount of 0.3 to 5.5 % by mol, preferably 0.4 to 4 % by mol, more preferably 0.7 to 3. % by mol and most preferably 1 to 2.4 % by mol, especially 1.2 to 2 % by mol.

Preferred values may be about 0.8 mol% of C4 and 1.6 mol% of C6.

The multimodal LLDPE terpolymer may therefore be formed from ethylene along with at least two of 1-butene, 1-hexene or 1-octene. The multimodal LLDPE, may be a terpolymer, whereby said terpolymer may comprise a homopolymer component and a terpolymer component, i.e. the polymer contains ethylene and two comonomers. The multimodal LLDPE, may comprise an ethylene butene hexene terpolymer HMW component and a LMW homopolymer component. The use of a terpolymer component of ethylene with 1-butene and 1-octene comonomers, or a terpolymer of ethylene with 1-octene and 1-hexene comonomers is also envisaged.

In a further embodiment, the multimodal LLDPE terpolymer may comprise two ethylene copolymers such that there are at least two C4-12 alpha olefin comonomers present, e.g. such as an ethylene butene copolymer (e.g. as the LMW component) and an ethylene hexene copolymer (e.g. as the HMW component). It would also be possible to combine an ethylene copolymer component and an ethylene terpolymer component such that there are at least two C4-12 alpha olefin comonomers present, e.g. an ethylene butene copolymer (e.g. as the LMW component) and an ethylene butene hexene terpolymer (e.g. as the HMW component).

A suitable multimodal LLDPE terpolymer preferably has:
(i) as a lower molecular weight (LMW) component an ethylene polymer component having an MFR₂ of 1.0 to 10.0 g/10 min (according to ISO 1133 at 190°C under 2.16 kg load) and
(ii) as a higher molecular weight (HMW) component an ethylene polymer component having an MFR₂ of 0.2 to 2.5 g/10 min (according to ISO 1133 at 190°C under 2.16 kg load),
and whereby the density of ethylene polymer component (i) is higher than the density of the ethylene polymer component (ii); the density of the ethylene polymer component (ii) being in the range of 930 to 950 kg/m³.

Alternatively, the LMW component of the multimodal LLDPE copolymer may have a MFR₂ of at least 50, preferably 50 to 3000 g/10 min, more preferably at least 100 g/10 min up to 1000 g/10 min. The molecular weight of the low molecular weight component should preferably range from 20,000 to 50,000, e.g. 25,000 to 40,000.

The HMW component of the multimodal LLDPE may for example have preferably an MFR₂ of less than 1 g/10 min, preferably less than 0.5 g/10 min, especially less than 0.2 g/10min. It may have a density of less than 915 kg/m³, e.g. less than 910 kg/m³, preferably less than 905 kg/m³. The Mw of the higher molecular weight component may range from 100,000 to 1,000,000, preferably 250,000 to 500,000.

The multimodal LLDPE terpolymer may be formed using single site catalysis or a Ziegler Natta catalyst. Both these types of catalyst are well known in the art.

In one embodiment, the multimodal LLDPE terpolymer may comprise an ethylene homopolymer and an ethylene butene hexene copolymer component and is, ideally made by single site catalysis and is therefore a metallocene catalyzed linear low density polyethylene (mLLDPE). In a further embodiment, the multimodal LLDPE terpolymer may comprise an ethylene butene copolymer and an ethylene hexene copolymer component and is, ideally made by single site catalysis and is therefore a metallocene catalyzed linear low density polyethylene (mLLDPE).

Metallocene catalyzed linear low density polyethylenes (mLLDPE) are known in the art and as such not subject of the invention. Reference is made in this regard for Example to EP 3 257 895 A1, example IE1 of EP 3 257 895 A1 or PCT/EP2019/086918, e.g. the 2nd second bimodal terpolymer or WO 2019/081611, Example 3.

The multimodal (e.g. bimodal) polymers can in general be made by mechanical blending two or more, separately prepared polymer components or, preferably, by in-situ blending in a multistage polymerisation process during the preparation process of the polymer components. Both mechanical and in-situ blending are well known in the field.

Accordingly, preferred multimodal LLDPEs, are prepared by in-situ blending in a multistage, i.e. two or more stage, polymerization or by the use of two or more different polymerization catalysts, including multi- or dual site catalysts, in a one stage polymerization.

Preferably the multimodal LLDPE, is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal polymer, e.g. LLDPE, present is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AlChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place. The polymers of use on the invention are however commercially available materials.

An example for a metallocene catalyzed linear low density polyethylene (mLLDPE) is Anteo^{™} FK1820, which is a bimodal ethylene/1-butene/1-hexene terpolymer with a density of 918 kg/m³ and an MFR₂ of 1.5 g/10min commercially available from Borouge.

### Plastomer

Layer A furthermore comprises a plastomer. The plastomer may be a copolymer of ethylene and 1-butene, 1-hexene or 1-octene in which the ethylene forms the major component. Preferred plastomers are copolymers of ethylene and 1-butene or ethylene and 1-octene, more preferably ethylene and 1-octene. The content of comonomer, such as 1-octene, in the plastomer may be 5 to 30 wt%, such as 7.5 to 25 wt%.

In an embodiment, as mentioned above the plastomer of layer A may have a density of between > 870 and < 895 kg/m³, preferably between 875 and < 890 kg/m³, further preferred > 875 and < 885 kg/m³ and/or an MFR₂ of between 0.1 and 5 g/10min, preferably 0.5 and 3.0 g/10min, further preferred 0.6 and 2.0 g/10min.

According to another embodiment the plastomer of layer A may have a MFR₂ of between 0.1 and 10 g/10min, preferably 0.3 to 7 g/10min and more preferably from 0.5 to 5.0 g/10min.

The molecular mass distribution Mw/Mn of suitable ethylene based plastomers is most often below 4, such as 3.8 or below, but is at least 1.7. It is preferably between 3.5 and 1.8.

Suitable ethylene based plastomers can be any copolymer of ethylene and propylene or ethylene and C4 - C10 alpha olefin having the above defined properties, which are commercial available, i.a. from Borealis under the tradename Queo, from DOW Chemical Corp (USA) under the tradename Engage or Affinity, or from Mitsui under the tradename Tafmer.

Alternately these ethylene based plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons.

Preferably, these ethylene based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100°C. Preferably the polymerization temperature is at least 110°, more preferably at least 150°C. The polymerization temperature can be up to 250°C.

The pressure in such a solution polymerization process is preferably in a range of 10 to 100 bar, preferably 15 to 100 bar and more preferably 20 to 100 bar.

The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the Borceed technology.

Plastomers of the invention are ideally formed using metallocene type catalysts. Plastomers of use in the invention are commercially available and can be bought from polymer suppliers and aid the sealing of the claimed films.

### Polymer for Layer B)

Layer B comprises at least one multimodal copolymer of ethylene with at least one C4-12 alpha olefin and having a density of 915 to 940 kg/m³ and an MFR₂ of 0.1 to 5 g/10min. The polymer is preferably a multimodal linear low density polyethylene (LLDPE) with at least one C4-12 alpha olefin which comprises a lower molecular weight (LMW) component and a higher molecular weight (HMW) component. Layer B should be different to layer A.

In one embodiment the at least one multimodal copolymer of ethylene with at least one C4-12 alpha olefin may be a Ziegler Natta catalysed LLDPE copolymer. In another embodiment, the multimodal LLDPE copolymer may comprise two ethylene butene copolymer components and is, ideally made by a Ziegler Natta catalyst and is therefore a Ziegler Natta catalyzed linear low density polyethylene (znLLDPE).

In another embodiment of the present invention, in the multimodal LLDPE of use in layer B), the HMW component as well as the lower molecular weight (LMW) component are ethylene copolymers of ethylene with one C4-12 alpha olefin, preferably copolymers of ethylene with 1-butene. In this case, the multimodal LLDPE is a multimodal LLDPE copolymer.

Such Ziegler Natta catalyzed linear low density polyethylene (znLLDPE) are also known in the art and as such not subject of the invention. They are for example produced using a ZN catalysts as disclosed in EP 688794, EP 835887, WO 2004/000933, WO 2004/000902 or WO 2004/106393..

An example for a Ziegler Natta catalysed linear low density polyethylene (znLLDPE) is FB2230, which is a bimodal ethylene/1-butene copolymer with a density of 923 kg/m³ and an MFR₂ of 0.2 g/10min commercially available from Borealis.

In another embodiment the at least one multimodal copolymer of ethylene with at least one C4-12 alpha olefin may be an ethylene terpolymer, such as a Ziegler Natta catalysed ethylene terpolymer.

The multimodal ethylene terpolymer may comprise at least two C4-12 alpha-olefin comonomers. Ideally, the multimodal ethylene terpolymer contains 2 comonomers only. The comonomers are especially selected from 1-butene, 1-hexene or 1-octene. The amount of comonomers present in the multimodal ethylene terpolymer is preferably 0.5 to 12 mol%, e.g. 2 to 10% mole, especially 4 to 8% mole.

The multimodal ethylene terpolymer suitable for use in films of the present invention can comprise a lower molecular weight fraction being a polyethylene homopolymer and a higher molecular weight fraction being a terpolymer of ethylene and at least two alpha olefin comonomers having 4 - 10 carbon atoms.

Thus, the multimodal ethylene terpolymer suitable for use in layer B of the films of the present invention can preferably comprise:
(b-1) a lower molecular weight homopolymer of ethylene; and
(b-2) a higher molecular weight terpolymer of ethylene, 1-butene and a C6-C10-alpha-olefin.

Preferably, the comonomer of the higher molecular weight component is a C6-C10-alpha-olefin selected from the group of 1-hexene, 4-methyl-1-pentene, 1-octene and 1-decene, especially 1-hexene or 1-octene.

The multimodal ethylene terpolymer preferably has a density of 930 to 940 kg/m³, e.g. > 930- < 940 kg/m³. Ideally, the multimodal terpolymer has a density of 930 to 936 kg/m³, such as > 930 - 936 kg/m³. Alternatively the density may be from 933 - 938 kg/m³.

The multimodal ethylene terpolymer may be produced by polymerisation using conditions which create a multimodal (e.g. bimodal) polymer product ideally using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) composition is produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662). Terpolymers meeting the requirements of the invention are known and can be bought from suppliers such as Borealis, e.g. FX1002.

Layer B) may also comprise a further multimodal copolymer of ethylene with at least one C4-12 alpha olefin. The further multimodal copolymer of ethylene with at least one C4-12 alpha olefins of layer B may be a multimodal linear low density polyethylene (LLDPE) as described above for layer A, preferably a mLLDPE as described for Layer A. The further multimodal copolymer of ethylene with at least one C4-12 alpha olefin of layer B) may have a density of 915 to 940 kg/m³, preferably 916 to 925 kg/m³, such as > 916 to < 925 kg/m³ and/or MFR₂ of 0.1 and 3.0 g/10min, preferably > 0.1 and < 2.0 g/10min.

### Polymer for optional Layer C

In an embodiment of a film according to the invention, a third layer C is present. The third layer C may comprise a multimodal copolymer of ethylene with at least one C4-12 alpha olefin, having a density of 915 to 960 kg/m³, such as > 915 to 960 kg/m³, preferably 915 to 940 kg/m³ such as > 915 to 940 kg/m³ and an MFR₂ of 0.1 to 5 g/10min. Layer C) may comprise at least 75 wt% of said multimodal copolymer of ethylene.

The multimodal copolymer of ethylene of layer C may be the same as described above for layer A or B. Preferably Layer C consists of only one multimodal copolymer of ethylene, e.g. as described for Layer B.

Thus the multimodal copolymer of ethylene of layer C is preferably either the multimodal LLDPE terpolymer as described for layer B or the multimodal LLDPE copolymer as described for Layer B.

### Films

Films are produced by extrusion through an annular die with a pressure difference applied to blow the extruded cylinder into a film and achieve the desired orientation within the film, i.e. to build a stress into the cooled film.

For film formation using polymer mixtures the different polymer components (e.g. within layers (A), (B) and optional (C)) are typically intimately mixed prior to extrusion and blowing of the film as is well known in the art. It is especially preferred to thoroughly blend the components, for example using a twin screw extruder or a single screw extruder, preferably a counter-rotating extruder prior to extrusion and film blowing.

The films of the invention are uniaxially oriented. That means that they are stretched in a single direction, the machine direction. They are therefore not biaxially oriented films.

The preparation of a uniaxially oriented multilayer film of the invention comprises at least the steps of forming a layered film structure and stretching the obtained multilayer film in a draw ratio of at least 1:2, preferably 1:3, more preferably at least 1:4, and still more preferably 1:6. The upper limit for the draw ratio is 1:8.

Typically the compositions providing the layers of the film will be blown i.e. (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

The obtained film is subjected to a subsequent stretching step, wherein the film is stretched in the machine direction. Stretching may be carried out by any conventional technique using any conventional stretching devices which are well known to those skilled in the art. Preferably a stretching device suited for stretching at temperatures >100°C is used.

The films of the invention may not be made by a process in which the formed bubble is then collapsed e.g. in nip rolls to form said film where layers (A) are contacted inside/inside, i.e. ABA/ABA.

In the present invention, the coextruded bubble may be collapsed and split into two films. The two films can then be stretched separately in a winding machine. For ABC films the coextrude bubble may be cut into one film of 2*lay flat width.

Stretching is preferably carried out at a temperature in the range 90 - 125°C e.g. about 105°C. Any conventional stretching rate may be used, e.g. 2 to 40 %/second.

The film is stretched only in the machine direction to be uniaxial. The effect of stretching in only one direction is to uniaxially orient the film.

An effect of stretching (or drawing) is that the thickness of the film is similarly reduced. Thus a draw ratio of at least 1:3 preferably also means that the thickness of the film is at least three times less than the original thickness.

Blow extrusion and stretching techniques are well known in the art, e.g. in EP-A-299750.

The film preparation process steps of the invention are known and may be carried out in one film line in a manner known in the art. Such film lines are commercially available.

The films of the invention have an original thickness of 40 to 360 µm before stretching, preferably 50 to 300 µm and more preferably 55 to 240 µm.

After stretching, the final thickness of the uniaxially oriented films according to this invention is typically in the range 10 to 40 µm, preferably 15 to 35 µm and more preferably of 18 to 30 µm.

For the three-layer structure the outer layers (layer A and C) and core layer (layer B) may all be of equal thickness or alternatively the core layer (layer B) may be thicker than each outer layer. A convenient film comprises two outer layers which each form 10 to 35%, preferably 15 to 30% of the total final thickness of the 3-layered film, the core layer forming the remaining thickness, e.g. 30 to 80%, preferably 40 to 70% of the total final thickness of the 3-layered film.

The total thickness of the film is 100%, thus the some of the individual layers has to be 100%.

In an embodiment of the invention, films according to the invention, e.g. wherein the multimodal linear low density polyethylene (LLDPE) in layer A is a metallocene catalyzed linear low density polyethylene (mLLDPE) terpolymer, have a sealing initiation temperature (SIT) (determined at the temperature at which the seal strength reaches 10 N for 25 µm MDO blown film as described in the experimental part, ) in the range of from 70° C to below 105°C, preferably 73°C to 100°C, more preferably 75°C to 90°C.

### Applications

The films of the invention are preferably used in packaging of household, food, healthcare or beverage products. In particular, the films are of use in form fill and seal applications, especially for fresh produce.

The invention will now be explained with reference to the following non limiting examples and figures.

### Brief Description of the figures

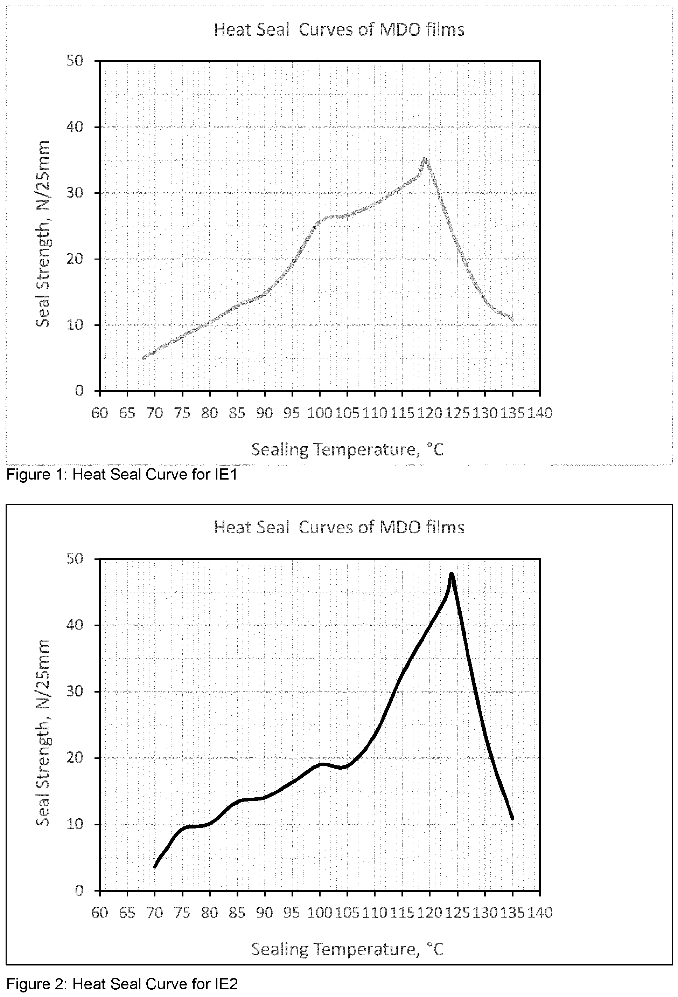

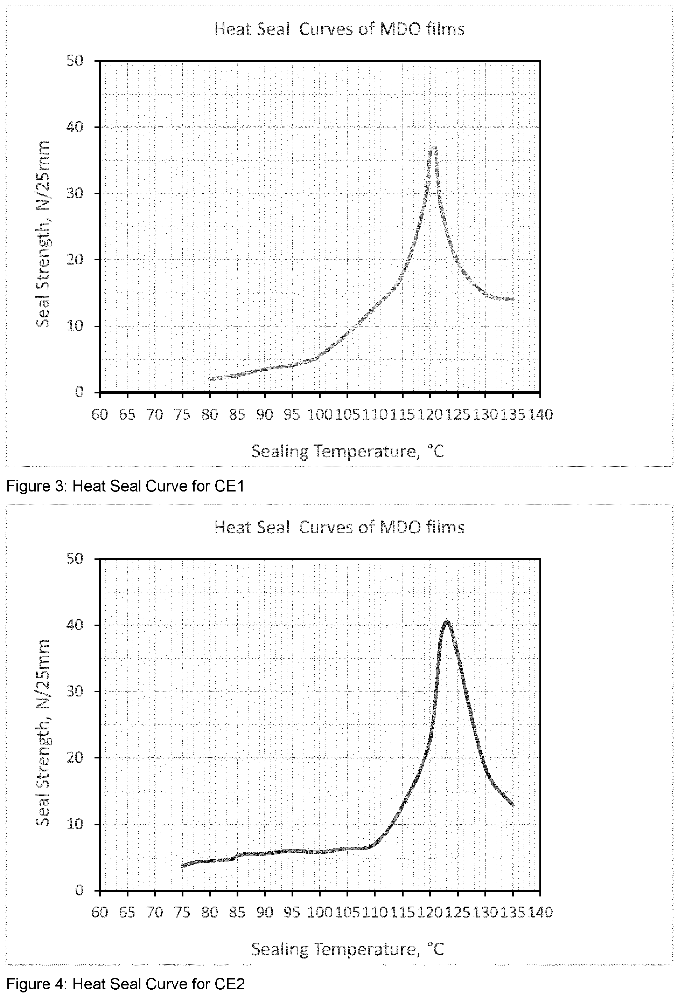

Figure 1 illustrates the heat seal curve for IE1. Figure 2 illustrates the heat seal curve for IE2. Figure 3 illustrates the heat seal curve for CE1. Figure 4 illustrates the heat seal curve for CE2.

### Determination methods

**Density** of the materials is measured according to ISO 1183:1987 (E), method D, with isopropanol-water as gradient liquid. The cooling rate of the plaques when crystallising the samples was 15 °C/min. Conditioning time was 16 hours.

### Melt Flow Rate (MFR) or Melt Index (MI)

The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂₁ is measured under 21.6 kg load.

### Molecular weights, molecular weight distribution, Mn, Mw, MWD

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 39 x10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

**Comonomer Content (%wt and %mol)** was determined by using ¹³C-NMR. The ¹³C-NMR spectra were recorded on Bruker 400 MHz spectrometer at 130 °C from samples dissolved in 1,2,4-trichlorobenzene/benzene-d₆ (90/10 w/w). Conversion between %wt and %mol can be carried out by calculation.

**Impact Strength** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/µm) is then calculated by dividing the DDI by the thickness of the film.

**Tensile modulus (secant modulus, 0.05-1.05%** ) is measured according to ASTM D 882-A on film samples prepared as described under below "Film Sample preparation". The speed of testing is 5mm/min. The test temperature is 23°C. Width of the film was 25 mm.

### Haze:

Haze was determined according to ASTM D 1003-00 on films as produced indicated below.

### Gloss:

Gloss was determined according to ASTM D2457 measured outside, lengthwise, at an angle of 60° (in MD) on films as produced indicated below.

### Sealing initiation temperature (SIT); sealing end temperature (SET), sealing range:

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of > 5 N is achieved. The upper limit (sealing end temperature (SET)) is reached, when the films stick to the sealing device.

The sealing range is determined on a J&B Hot Tack Testerwith a film of 25 µm thickness with the following further parameters:
Specimen width: 25 mm
Seal Pressure: 0.4 N/mm2
Seal Time: 1 sec
Cool time: 30 sec
Grip separation rate: 42 mm/sec
Start temperature: 80°C
End temperature: 150°C
Increments: 5°C

Specimen is sealed A to A at each sealbar temperature and seal strength (force) is determined at each step. The temperature is determined at which the seal strength reaches 10 N.

### Examples:

### Materials used:

**Queo^{™} 8201:** ethylene based octene plastomer, MFR(190/2.16) of 1.1 g/10 min, unimodal, density 882 kg/m³, produced in a solution polymerization process using a metallocene catalyst provided by Borealis AG). It contains processing stabilizers.
**FX1002:** is a multimodal alpha olefin terpolymer commercially available by Borealis AG, with density of 937 kg/m³ (determined according to ISO 1183), a Melt Flow Rate (190°C/2.15 kg) of 0.4 g/10min and a Melt Flow Rate (190°C/21 kg) of 42 g/10min (according to ISO 1133).
**Anteo^{™} FK1820:** bimodal ethylene/1-butene/1-hexene terpolymer with a density of 918 kg/m³ and an MFR₂ of 1.5 g/10min commercially available from Borouge.
**FB2230:** bimodal ethylene/1-butene copolymer with a density of 923 kg/m³ and an MFR2 of 0.2 g/10min commercially available from Borealis.

### Film preparation

Three layer blown films were produced on a Dr. Colin 3 Layer Blown film line. The melt temperature of the sealing layer (A) was 180 to 200°C, the melt temperature of the core layer (B) was in the range of 190°C to 210°C and for the outer layer (C) 200°C. The throughput of the extruders was in sum 10 kg/h. Layer thickness has been determined by Scanning Electron Microscopy. The compositions used for the layers are indicated in the table 1.

Further parameters for the blown film line were:
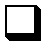 **Die Gap:** 1,5 mm
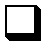 **Die Size:** 60mm
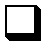 **BUR:** 1:3,5
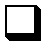 **Frost Line Height:** 120 mm

The formed films had a total thickness of 150 µm.

**Table 1: composition of the 3 layer films:**

| Example | | | IE1 | IE2 | CE1 | CE2 |
|---|---|---|---|---|---|---|
| Layer A | 30 µm | FK1820 | 35 | 65 | | |
| | | Queo 8201 | 65 | 35 | 35 | 35 |
| | | FB2230 | | | 65 | 65 |
| Layer B | 90 µm | FB2230 | 100 | | 100 | |
| | | FX1002 | | 80 | | 80 |
| | | FK1820 | | 20 | | 20 |
| Layer C | 30 µm | FB2230 | 100 | | | |
| | | FX1002 | | 100 | 100 | 100 |

Stretching was carried out using a monodirectional stretching machine manufactured by Hosokawa Alpine AG in Augsburg/Germany. The unit consists of preheating, drawing, annealing, and cooling sections, with each set at specific temperatures to optimize the performance of the unit and produce films with the desired properties.

### Parameters:

Output Rate: 46m/min; 9kg/hr
Take Off Speed: 46.3 m/min
Temperature:
   Pre-Heating: 105°C
   Stretching: 95°C
   Annealing: 90°C →80°C
   Cooling: 40°C →20°C

The film obtained from blown film extrusion was pulled into the orientation machine then stretched between two sets of nip rollers where the second pair runs at higher speed than the first pair resulting in the desired draw ratio. Stretching is carried out with the respective draw ratios to reach the desired thickness. (draw ratios and final thickness of MDO films are given in Table 2) After exiting the stretching machine the film is fed into a conventional film winder where the film is slit to its desired width and wound to form reels.

The properties of the multilayer films after stretching are also indicated in table 2.

**Table 2:**

| Examples | | | IE1 | IE2 | CE1 | CE2 |
|---|---|---|---|---|---|---|
| Primary film thickness [µm] | | | 150 | 150 | 150 | 150 |
| Draw ratio | | | 1:6 | 1:6 | 1:6 | 1:6 |
| Final film thickness [µm] | | | 25 | 25 | 25 | 25 |

| | Parameter | unit | | | | |
|---|---|---|---|---|---|---|
| SIT (10N/25mm) | SIT | °C | 79 | 79 | 107 | 113 |
| Tensile test MD | Tensile modulus | MPa | 720 | 1146 | 728 | 1319 |
| Optics | Gloss (60°) | % | 92 | 77 | 92 | 73 |
| | Haze | % | 10.4 | 10.6 | 11.7 | 10.2 |

In Figure 1 to 4 the heat seal curves for determining SIT (10N/25mm) of IE1, IE2, CE1 and CE2 are shown. As can be easily seen from the figures and the table the inventive film structures show an extremely low SIT compared to the comparative film structures.

## Claims

1. A multilayer machine direction oriented film comprising at least one layer A and one layer B,
wherein layer A comprises 25 to 75 w%, based on the total weight of the layer, of at least one multimodal linear low density polyethylene (LLDPE) terpolymer with at least two C4-12 alpha olefins having a density of 910 to 925 kg/m³ and an MFR₂ of 0.05 to 5 g/10min which comprises a lower molecular weight (LMW) component and a higher molecular weight (HMW) component;
wherein the HMW component of the LLDPE is a terpolymer or wherein both the HMW component and the LMW component of the LLDPE are copolymers of ethylene with one C4-12 alpha olefin and wherein the comonomer present in the LMW and HMW components is different;
and 75 to 25 w%, based on the total weight of the layer, of at least one ethylene based plastomer with a density between 870 and 900 kg/m³; and
wherein layer B comprises 75 to 100 w%, based on the total weight of polymer in the layer, of at least one multimodal copolymer of ethylene with at least one C4-12 alpha olefin having a density of 915 to 940 kg/m³ and an MFR₂ of 0.1 to 5 g/10min.

2. A film according to claim 1, whereby said film is a stretched film which is uniaxially oriented in the machine direction (MD) in a draw ratio of 1:2 to 1:8, preferably 1:3 to 1:8 and having a film thickness of between 10 and 50 microns (after stretching) and/or whereby the ratio of the thickness of layer B to the thickness of layer A is between 1 and 6, preferably between 1.5 and 5.

3. A film as claimed in claim 1 or 2 wherein the HMW component of the LLDPE of layer A is a terpolymer of ethylene, 1-butene and 1-hexene.

4. A film as claimed in claim 1 or 3 wherein layer A comprises 55 to 70 w%, preferably > 57 to < 70 w%, based on the total weight of the layer, of the multimodal LLDPE and 30 to 45 w%, preferably > 30 to < 43 w% of said plastomer; or
wherein layer A comprises 55 to 70 w%, preferably > 57 to < 70 w%, based on the total weight of the layer, of said plastomer and 30 to 45 w%, preferably > 30 to < 43 w% of the multimodal LLDPE.

5. A film as claimed in claim 1 to 4 wherein the multimodal LLDPE of layer A has either a density of between 915 and < 925 kg/m³, preferably between > 915 and < 920 kg/m³ or between 918 and 925 kg/m3, preferably between 920 and 925 kg/m³.

6. A film as claimed in any preceding claim the multimodal LLDPE of layer A has an MFR₂ of between 0.1 and 3.0 g/10min, preferably > 0.1 and < 2.0 g/10min.

7. A film as claimed in any preceding claim wherein the plastomer of layer A is a copolymer of ethylene and 1-butene or ethylene and 1-octene or a terpolymer of ethylene, 1-octene and 1-hexene or ethylene, 1-octene and 1-butene.

8. A film as claimed in any preceding claim wherein the plastomer of layer A has a density of between 870 and < 895 kg/m³, preferably between 875 and < 890 kg/m³, further preferred > 880 and 900 kg/m³ and/or an MFR₂ of between 0.1 and 5 g/10min, preferably 0.5 and 3.0 g/10min, further preferred 0.6 and 2.0 g/10min.

9. A film as claimed in any preceding claim wherein the multimodal copolymer of ethylene with at least one C4-12 alpha olefin of layer B has either a density of > 916 to 940 kg/m³, preferably > 916 to 925 kg/m³ or > 930 to < 940 kg/m³.

10. A film as claimed in any preceding claim wherein the multimodal copolymer of ethylene with at least one C4-12 alpha olefins of layer B has an MFR₂ of 0.1 and 3.0 g/10min, preferably > 0.1 and < 2.5 g/10min.

11. A film as claimed in any preceding claim wherein the multimodal copolymer of ethylene of layer B comprises a high molecular weight (HMW) component and a low molecular weight (LMW) component, whereby either the LMW component is an ethylene homopolymer and the HMW component is a terpolymer, preferably a terpolymer of ethylene, 1-butene and 1-hexene or whereby both the HMW component and the LMW components of multimodal copolymer of ethylene of layer B are copolymers of ethylene with one C4-12 alpha olefin.

12. A film as claimed in any preceding claim wherein layer B comprises 77 to 100 w% or < 100 w%, preferably > 78 w% to 100 w% or < 100 w% of the multimodal ethylene copolymer and/or comprises 0 to 23 w% , further preferred 0 to < 22 w% of a further multimodal copolymer of ethylene with at least one C4-12 alpha olefin having a density of 915 to 940 kg/m³, preferably > 916 to < 925 kg/m³ and/or MFR₂ of 0.1 and 3.0 g/10min, preferably > 0.1 and < 2.0 g/10min.

13. A film as claimed in any preceding claim wherein the film comprises three layers with layer B located between layer A and a third layer C, optionally wherein the third layer C comprises a multimodal copolymer of ethylene with at least one C4-12 alpha olefin having a density of > 915 to 960 kg/m³ and an MFR₂ of 0.1 to 5 g/10min.

14. A film as claimed in claim 13, wherein the third layer C is different from layer B and/or wherein the film is asymmetric.

15. A film as claimed in any preceding claim, wherein the multimodal linear low density polyethylene (LLDPE) in layer A is a metallocene catalyzed linear low density polyethylene (mLLDPE), optionally wherein the film has a sealing initiation temperature (SIT), determined at the temperature at which the seal strength reaches 10 N on 25 µm MDO blown film as described in the experimental part, in the range of from 70° C to below 105°C, preferably 73°C to 100°C, more preferably 75°C to 90°C.

16. A process for the preparation of a multilayer machine direction oriented film comprising
(I) obtaining a composition A) comprising 25 to 75 wt%, based on the total weight of the composition, of at least a multimodal linear low density polyethylene (LLDPE) terpolymer with at least two C4-12 alpha olefins having a density of 910 to 925 kg/m³ and an MFR₂ of 0.05 to 5 g/10min which comprises a lower molecular weight (LMW) component and a higher molecular weight (HMW) component;
wherein the HMW component of the LLDPE is a terpolymer or wherein both the HMW component and the LMW component of the LLDPE are copolymers of ethylene with one C4-12 alpha olefin and wherein the comonomer present in the LMW and HMW components is different;
and 25 to 75 w%, based on the total weight of the composition, of at least one ethylene based plastomer with a density between 870 and 900 kg/m³,
(II) obtaining a composition B) comprising 75 to 100 w% based on the total weight of the composition, of at least one multimodal copolymer of ethylene with at least one C4-12 alpha olefin having a density of 915 to 940 kg/m³ and an MFR₂ of 0.1 to 5 g/10min;
(III) coextruding compositions A) and B) to form a multilayer film having layers A) and B) comprising compositions A) and B) respectively; and
(IV) uniaxally stretching said film in the machine direction in a draw ratio of at least 1:2.

17. Use of a multilayer machine direction oriented film as claimed in claims 1 to 15 in packaging.

## Patentansprüche

1. Mehrschichtige, in Maschinenrichtung ausgerichtete Folie, die mindestens eine Schicht A und eine Schicht B umfasst,
wobei Schicht A 25 bis 75 Gew.-%, basierend auf dem Gesamtgewicht der Schicht, von mindestens einem multimodalen linearen Polyethylen niedriger Dichte (LLDPE)-Terpolymer mit mindestens zwei C4-12-Alpha-Olefinen umfasst, das eine Dichte von 910 bis 925 kg/m³und eine MFR₂ von 0,05 bis 5 g/10 min aufweist, das eine Komponente mit niedrigerem Molekulargewicht (LMW) und eine Komponente mit höherem Molekulargewicht (HMW) umfasst;
wobei die HMW-Komponente des LLDPE ein Terpolymer ist oder wobei sowohl die HMW-Komponente als auch die LMW-Komponente des LLDPE Copolymere von Ethylen mit einem C4-12-Alpha-Olefin sind und wobei das in der LMW- und der HMW-Komponente vorhandene Comonomer unterschiedlich ist;
und 75 bis 25 Gew.-%, basierend auf dem Gesamtgewicht der Schicht, von mindestens einem auf Ethylen basierten Plastomer mit einer Dichte zwischen 870 und 900 kg/m³; und
wobei Schicht B 75 bis 100 Gew.-%, basierend auf dem Gesamtgewicht von Polymer in der Schicht, von mindestens einem multimodalen Copolymer von Ethylen mit mindestens einem C4-12-Alpha-Olefin, das eine Dichte von 915 bis 940 kg/m³ und eine MFR₂ von 0,1 bis 5 g/10 min aufweist, umfasst.

2. Folie nach Anspruch 1, wobei die Folie eine gestreckte Folie ist, die in Maschinenrichtung (MD) einachsig in einem Streckverhältnis von 1:2 bis 1:8, vorzugsweise 1:3 bis 1:8 ausgerichtet ist, und eine Foliendicke zwischen 10 und 50 Mikrometer (nach Strecken) aufweist, und/oder wobei das Verhältnis der Dicke der Schicht B zur Dicke der Schicht A zwischen 1 und 6, vorzugsweise zwischen 1,5 und 5 liegt.

3. Folie nach Anspruch 1 oder 2, wobei die HMW-Komponente des LLDPE der Schicht A ein Terpolymer von Ethylen, 1-Buten und 1-Hexen ist.

4. Folie nach Anspruch 1 oder 3, wobei die Schicht A 55 bis 70 Gew.-%, vorzugsweise > 57 bis < 70 Gew.-%, basierend auf dem Gesamtgewicht der Schicht, des multimodalen LLDPE, und 30 bis 45 Gew.-%, vorzugsweise > 30 bis < 43 Gew.-% des Plastomers umfasst; oder
wobei Schicht A 55 bis 70 Gew.-%, vorzugsweise > 57 bis < 70 Gew.-%, basierend auf dem Gesamtgewicht der Schicht, des Plastomers und 30 bis 45 Gew.-%, vorzugsweise > 30 bis < 43 Gew.-% des multimodalen LLDPE umfasst.

5. Folie nach Anspruch 1 bis 4, wobei das multimodale LLDPE der Schicht A entweder eine Dichte zwischen 915 und < 925 kg/m³, vorzugsweise zwischen >915 Und < 920 kg/m³ oder zwischen 918 und 925 kg/m3, vorzugsweise zwischen 920 und 925 kg/m³ aufweist.

6. Folie nach einem vorstehenden Anspruch, wobei das multimodale LLDPE der Schicht A eine MFR₂ zwischen 0,1 und 3,0 g/10 min, vorzugsweise > 0,1 und < 2,0 g/10 min aufweist.

7. Folie nach einem vorstehenden Anspruch, wobei das Plastomer der Schicht A ein Copolymer von Ethylen und 1-Buten oder Ethylen und 1-Octen oder ein Terpolymer von Ethylen, 1-Octen und 1-Hexen oder Ethylen, 1-Octen und 1-Buten ist.

8. Folie nach einem vorstehenden Anspruch, wobei das Plastomer von Schicht A eine Dichte zwischen 870 und < 895 kg/m³, vorzugsweise zwischen 875 und < 890 kg/m³, weiter bevorzugt > 880 und 900 kg/m³ und/oder eine MFR₂ zwischen 0,1 und 5 g/10 min, vorzugsweise 0,5 und 3,0 g/10 min, weiter bevorzugt 0,6 und 2,0 g/10 min aufweist.

9. Folie nach einem vorstehenden Anspruch, wobei das multimodale Copolymer von Ethylen mit mindestens einem C4-12-Alpha-Olefin von Schicht B entweder eine Dichte von > 916 bis 940 kg/m³, vorzugsweise > 916 bis 925 kg/m³ oder > 930 bis < 940 kg/m³ aufweist.

10. Folie nach einem vorstehenden Anspruch, wobei das multimodale Copolymer von Ethylen mit mindestens einem C4-12-Alpha-Olefin von Schicht B eine MFR₂ zwischen 0,1 und 3,0 g/10 min, vorzugsweise > 0,1 und < 2,5 g/10 min aufweist.

11. Folie nach einem vorstehenden Anspruch, wobei das multimodale Copolymer von Ethylen von Schicht B eine Komponente mit hohem Molekulargewicht (HMW) und eine Komponente mit niedrigem Molekulargewicht (LMW) umfasst, wobei entweder die LMW-Komponente ein Ethylenhomopolymer ist und die HMW-Komponente ein Terpolymer, vorzugsweise ein Terpolymer von Ethylen, 1-Buten und 1-Hexen ist, oder wobei sowohl die HMW-Komponente als auch die LMW-Komponenten des multimodalen Copolymers von Ethylen von Schicht B Copolymere von Ethylen mit einem C4-12-Alphaolefin sind.

12. Folie nach einem vorstehenden Anspruch, wobei die Schicht B 77 bis 100 Gew.-% oder < 100 Gew.-%, vorzugsweise > 78 Gew.-% bis 100 Gew.-% oder < 100 Gew.-% des multimodalen Copolymers von Ethylen umfasst, und/oder 0 bis 23 Gew.-%, weiter bevorzugt 0 bis < 22 Gew.-% eines weiteren multimodalen Copolymers von Ethylen mit mindestens einem C4-12-Alpha-Olefin, das eine Dichte von 915 bis 940 kg/m³, vorzugsweise > 916 bis < 925 kg/m3 und/oder eine MFR₂ von 0,1 und 3,0 g/10 min, vorzugsweise >0,1 und < 2,0 g/10 min aufweist.

13. Folie nach einem vorstehenden Anspruch, wobei die Folie drei Schichten umfasst, wobei sich Schicht B zwischen Schicht A und einer dritten Schicht C befindet, wobei die dritte Schicht C optional ein multimodales Copolymer von Ethylen mit mindestens einem C4-12-Alpha-Olefin umfasst, das eine Dichte von > 915 bis 960 kg/m³ und eine MFR2 von 0,1 bis 5 g/10 min aufweist.

14. Folie nach Anspruch 13, wobei sich die dritte Schicht C von Schicht B unterscheidet und/oder wobei die Folie asymmetrisch ist.

15. Folie nach einem vorstehenden Anspruch, wobei das multimodale lineare Polyethylen niedriger Dichte (LLDPE) in Schicht A ein metallocenkatalysiertes lineares Polyethylen niedriger Dichte (mLLDPE) ist, wobei die Folie optional eine Anfangsversiegelungstemperatur (SIT), die bei der Temperatur bestimmt wird, bei der die Siegelfestigkeit bei 25 pm MDO-Blasfolie, wie im experimentellen Teil beschrieben, 10 N erreicht, im Bereich von 70° C bis unter 105° C, vorzugsweise 73° C bis 100° C, bevorzugter 75° C bis 90° C, aufweist.

16. Prozess zur Herstellung einer mehrschichtigen, in Maschinenrichtung ausgerichteten Folie, umfassend
(I) Erhalten einer Zusammensetzung A) umfassend 25 bis 75 Gew.-%, basierend auf dem Gesamtgewicht der Zusammensetzung, von mindestens einem multimodalen linearen Polyethylen niedriger Dichte (LLDPE)-Terpolymer mit mindestens zwei C4-12-Alpha-Olefinen, das eine Dichte von 910 bis 925 kg/m³und eine MFR₂ von 0,05 bis 5 g/10min aufweist, das eine Komponente mit niedrigerem Molekulargewicht (LMW) und eine Komponente mit höherem Molekulargewicht (HMW) umfasst;
wobei die HMW-Komponente des LLDPE ein Terpolymer ist oder wobei sowohl die HMW-Komponente als auch die LMW-Komponente des LLDPE Copolymere von Ethylen mit einem C4-12-Alpha-Olefin sind und wobei das in der LMW- und der HMW-Komponente vorhandene Comonomer unterschiedlich ist;
und 25 bis 75 Gew.-%, basierend auf dem Gesamtgewicht der Zusammensetzung, von mindestens einem auf Ethylen basierten Plastomer mit einer Dichte zwischen 870 und 900 kg/m³,
(II) Erhalten einer Zusammensetzung B) umfassend 75 bis 100 Gew.-%, basierend auf dem Gesamtgewicht der Zusammensetzung, von mindestens einem multimodalen Copolymer von Ethylen mit mindestens einem C4-12-Alpha-Olefin, das eine Dichte von 915 bis 940 kg/m³ und eine MFR₂ von 0,1 bis 5 g/10 min aufweist;
(III) Coextrudieren von Zusammensetzung A) und B), um eine mehrschichtige Folie zu bilden, die Schichten A) und B) aufweist, die die Zusammensetzungen A) bzw. B) umfassen; und
(IV) einachsig Strecken der Folie in Maschinenrichtung mit einem Streckverhältnis von mindestens 1:2.

17. Verwendung einer mehrschichtigen, in Maschinenrichtung ausgerichteten Folie nach den Ansprüchen 1 bis 15 beim Verpacken.

## Revendications

1. Film multicouche orienté dans le sens machine comprenant au moins une couche A et une couche B,
dans lequel la couche A comprend 25 à 75 % en poids, sur la base du poids total de la couche, d'au moins un terpolymère de polyéthylène basse densité linéaire (LLDPE) multimodal avec au moins deux alpha-oléfines en C4-12 présentant une densité de 910 à 925 kg/m³ et un MFR₂ de 0,05 à 5 g/10 min qui comprend un composant de poids moléculaire inférieur (LMW) et un composant de poids moléculaire supérieur (HMW) ;
dans lequel le composant HMW du LLDPE est un terpolymère ou dans lequel le composant HMW et le composant LMW du LLDPE sont tous deux des copolymères d'éthylène avec une alpha-oléfine en C4-12 et dans lequel le comonomère présent dans les composants LMW et HMW est différent ;
et 75 à 25 % en poids, sur la base du poids total de la couche, d'au moins un plastomère à base d'éthylène avec une densité comprise entre 870 et 900 kg/m³ ; et
dans lequel la couche B comprend 75 à 100 % en poids, sur la base du poids total de polymère dans la couche, d'au moins un copolymère multimodal d'éthylène avec au moins une alpha-oléfine en C4-12 présentant une densité de 915 à 940 kg/m³ et un MFR₂ de 0,1 à 5 g/10 min.

2. Film selon la revendication 1, selon lequel ledit film est un film étiré qui est orienté uniaxialement dans le sens machine (MD) selon un rapport d'étirage de 1:2 à 1:8, de préférence 1:3 à 1:8 et présentant une épaisseur de film comprise entre 10 et 50 micromètres (après étirage) et/ou selon lequel le rapport entre l'épaisseur de la couche B et l'épaisseur de la couche A est compris entre 1 et 6, de préférence entre 1,5 et 5.

3. Film selon la revendication 1 ou 2, dans lequel le composant HMW du LLDPE de la couche A est un terpolymère d'éthylène, de 1-butène et de 1-hexène.

4. Film selon la revendication 1 ou 3, dans lequel la couche A comprend 55 à 70 % en poids, de préférence > 57 à < 70 % en poids, sur la base du poids total de la couche, du LLDPE multimodal et de 30 à 45 % en poids, de préférence > 30 à < 43 % en poids dudit plastomère ; ou
dans lequel la couche A comprend 55 à 70 % en poids, de préférence > 57 à < 70 % en poids, sur la base du poids total de la couche, dudit plastomère et de 30 à 45 % en poids, de préférence > 30 à < 43 % en poids du LLDPE multimodal.

5. Film selon la revendication 1 à 4, dans lequel le LLDPE multimodal de la couche A présente soit une densité comprise entre 915 et < 925 kg/m³, de préférence entre > 915 et < 920 kg/m³ ou entre 918 et 925 kg/m3, de préférence entre 920 et 925 kg/m³.

6. Film selon une quelconque revendication précédente, le LLDPE multimodal de la couche A présente un MFR₂ compris entre 0,1 et 3,0 g/10 min, de préférence > 0,1 et < 2,0 g/10 min.

7. Film selon une quelconque revendication précédente, dans lequel le plastomère de la couche A est un copolymère d'éthylène et de 1-butène ou d'éthylène et de 1-octène ou un terpolymère d'éthylène, de 1-octène et de 1-hexène ou d'éthylène, de 1-octène et de 1-butène.

8. Film selon une quelconque revendication précédente, dans lequel le plastomère de la couche A présente une densité comprise entre 870 et < 895 kg/m³, de préférence entre 875 et < 890 kg/m³, davantage préféré > 880 et 900 kg/m³ et/ou un MFR₂ compris entre 0,1 et 5 g/10 min, de préférence 0,5 et 3,0 g/10 min, davantage préféré 0,6 et 2,0 g/10 min.

9. Film selon une quelconque revendication précédente, dans lequel le copolymère multimodal d'éthylène avec au moins une alpha-oléfine en C4-12 de la couche B présente soit une densité de > 916 à 940 kg/m³, de préférence > 916 à 925 kg/m³ ou > 930 à < 940 kg/m³.

10. Film selon une quelconque revendication précédente, dans lequel le copolymère multimodal d'éthylène avec au moins une alpha-oléfine en C4-12 de la couche B présente un MFR₂ de 0,1 et 3,0 g/10 min, de préférence > 0,1 et < 2,5 g/10 min.

11. Film selon une quelconque revendication précédente, dans lequel le copolymère multimodal d'éthylène de la couche B comprend un composant de poids moléculaire élevé (HMW) et un composant de poids moléculaire faible (LMW), selon lequel soit le composant LMW est un homopolymère d'éthylène et le composant HMW est un terpolymère, de préférence un terpolymère d'éthylène, de 1-butène et de 1-hexène, soit selon lequel à la fois le composant HMW et les composants LMW du copolymère multimodal d'éthylène de la couche B sont des copolymères d'éthylène avec une alpha-oléfine en C4-12.

12. Film selon une quelconque revendication précédente, dans lequel la couche B comprend 77 à 100 % en poids ou < 100 % en poids, de préférence > 78 % en poids à 100 % en poids ou < 100 % en poids du copolymère d'éthylène multimodal et/ou comprend 0 à 23 % en poids, davantage préféré 0 à < 22 % en poids d'un autre copolymère multimodal d'éthylène avec au moins une alpha-oléfine en C4-12 présentant une densité de 915 à 940 kg/m³, de préférence > 916 à < 925 kg/m3 et/ou un MFR₂ de 0,1 et 3,0 g/10 min, de préférence > 0,1 et < 2,0 g/10min.

13. Film selon une quelconque revendication précédente, dans lequel le film comprend trois couches, la couche B étant située entre la couche A et une troisième couche C, éventuellement dans lequel la troisième couche C comprend un copolymère multimodal d'éthylène avec au moins une alpha-oléfine en C4-12 présentant une densité de > 915 à 960 kg/m³ et un MFR2 de 0,1 à 5 g/10 min.

14. Film selon la revendication 13, dans lequel la troisième couche C est différente de la couche B et/ou dans lequel le film est asymétrique.

15. Film selon une quelconque revendication précédente, dans lequel le polyéthylène basse densité linéaire (LLDPE) multimodal dans la couche A est un polyéthylène basse densité linéaire catalysé par métallocène (mLLDPE), éventuellement dans lequel le film présente une température de scellage initial (SIT) déterminée à la température à laquelle la résistance de scellement atteint 10 N sur un film soufflé MDO de 25 µm comme décrit dans la partie expérimentale, dans la plage allant de 70 °C à moins de 105 °C, de préférence de 73 °C à 100 °C, plus préférentiellement de 75 °C à 90 °C.

16. Processus de préparation d'un film multicouche orienté dans le sens machine comprenant
(I) l'obtention d'une composition A) comprenant 25 à 75 % en poids, sur la base du poids total de la composition, d'au moins un terpolymère de polyéthylène basse densité linéaire (LLDPE) multimodal avec au moins deux alpha-oléfines en C4-12 présentant une densité de 910 à 925 kg/m³ et un MFR₂ de 0,05 à 5 g/10 min qui comprend un composant de poids moléculaire inférieur (LMW) et un composant de poids moléculaire supérieur (HMW) ;
dans lequel le composant HMW du LLDPE est un terpolymère ou dans lequel le composant HMW et le composant LMW du LLDPE sont tous deux des copolymères d'éthylène avec une alpha-oléfine en C4-12 et dans lequel le comonomère présent dans les composants LMW et HMW est différent ;
et 25 à 75 % en poids, sur la base du poids total de la composition d'au moins un plastomère à base d'éthylène avec une densité comprise entre 870 et 900 kg/m³ ;
(II) l'obtention d'une composition B) comprenant 75 à 100 % en poids sur la base du poids total de la composition, d'au moins un copolymère multimodal d'éthylène avec au moins une alpha-oléfine en C4-12 présentant une densité de 915 à 940 kg/m³ et un MFR₂ de 0,1 à 5 g/10 min ;
(III) la coextrusion des compositions A) et B) pour former un film multicouche présentant des couches A) et B) comprenant les compositions A) et B) respectivement ; et
(IV) l'étirement de manière uniaxiale dudit film dans le sens machine selon un rapport d'étirage d'au moins 1:2.

17. Utilisation d'un film multicouche orienté dans le sens machine selon les revendications 1 à 15 pour l'emballage.
